# EUROPÄISCHE PATENTANMELDUNG

(11) **EP 0 874 262 A2**
(43) Veröffentlichungstag der Anmeldung: **28.10.1998**
(21) Anmeldenummer: 98400795.5
(22) Anmeldetag: 03.04.1998
(51) Int. Cl.: G02B 6/44

(54) **Optisches Kabel und Verfahren zum Herstellen eines optischen Kabels**

(30) Priorität: 24.04.1997 DE 19717313
(71) Anmelder: ALCATEL ALSTHOM COMPAGNIE GENERALE D'ELECTRICITE, 75008 Paris (FR)
(72) Erfinder: Böhme, Ralph, Dipl.-Ing., 41169 Mönchengladbach (DE); Wichura, Dieter, Dipl.-Phys., 41844 Wegberg (DE); Nothofer, Klaus, Dipl.-Ing., 40699 Erkrath (DE)
(74) Vertreter: Mende, Dirk

(57) **Zusammenfassung**

Ein optisches Kabel (1) hat wenigstens eine optische Faser (3), die von einer eine innere Schicht (7) und eine äußere Schicht (9) aufweisenden und in einem Arbeitsschritt extrudierten rohrförmigen Hülle (5) umschlossen ist. In der rohrförmigen Hülle (5) sind zugfeste Elemente (11, 11') eingebettet, die die Zugfestigkeit der rohrförmigen Hülle (5) erhöhen. Das erfindungsgemäße optische Kabel eignet sich insbesondere als Innenkabel oder als nicht-selbsttragendes Luftkabel zur Installation an Erdseilen oder Phasenseilen von Hochspannungsfreileitungen.

## Beschreibung

Die Erfindung betrifft ein optisches Kabel mit wenigstens einer optischen Faser, die von einer eine innere Schicht und eine äußere Schicht aufweisenden und in einem Arbeitsschritt extrudierten rohrförmigen Hülle umschlossen ist, bzw. ein Verfahren zum Herstellen eines wenigstens eine von einer rohrförmigen Hülle umschlossene optische Faser aufweisenden optischen Kabels, bei dem eine innere Schicht und eine äußere Schicht der rohrförmigen Hülle in einem Arbeitsschritt gemeinsam um die optische Faser extrudiert werden.

Optische Fasern reagieren auf Dehnungs-, Biege- und Torsionsbeanspruchungen mit einer Dämpfungserhöhung. Darüber hinaus weisen sie eine relativ niedrige Bruchdehnung auf, so daß es schon bei vergleichsweise geringen mechanischen Beanspruchungen der optischen Fasern zu Schäden kommen kann. Es ist daher für den Einsatz von optischen Fasern in Kabeln unbedingt erforderlich, die optischen Fasern weitgehend frei von äußeren Einflüssen zu halten, indem sie von einer geeigneten Umhüllung umschlossen sind. So ist es bekannt, eine oder mehrere optische Fasern in einer durch ein Kunststoffröhrchen gebildeten rohrförmigen Hülle unterzubringen. Derartige rohrförmige Hüllen müssen eine ausreichende mechanische Festigkeit und eine gute Alterungsbeständigkeit aufweisen und dabei vergleichsweise flexibel sein. Um diesen Anforderungen gerecht zu werden, werden zweischichtige Kunststoffröhrchen verwendet, die aus einer inneren Schicht mit einem sehr niedrigen Reibungskoeffizienten und einer äußeren, mechanisch stabilen und alterungsbeständigen Schicht bestehen. Solche zweischichtigen rohrförmigen Hüllen werden üblicherweise in einem kontinuierlichen Prozeß mittels zwei hintereinander angeordneten Extrudern hergestellt. Zur Vereinfachung der Fertigung ist es ebenfalls bekannt, die beiden Schichten einer eine oder mehrere optische Fasern lose umschließenden zweischichtigen rohrförmigen Hülle in einem einzigen Arbeitsschritt mittels einer sogenannten Co-Extrusion in einer einzigen Extrusionseinrichtung herzustellen. Um bei einer eventuellen Beschädigung einer solchen optischen Hohl- oder Bündelader ein Entlangwandern von Wasser oder einer anderen Flüssigkeit innerhalb der rohrförmigen Hülle zu vermeiden, kann die rohrförmige Hülle mit einer geeigneten thixotropen Masse gefüllt sein.

Für die unterschiedlichen Verwendungszwecke und Installationsarten von optischen Kabeln sind die verschiedensten Kabelaufbauten bekannt. So ist beispielsweise in telcom report 17 (1994), Heft 4, Seiten 170 bis 172, ein Luftkabel dargestellt, das über einer zentralen Bündelader, die durch eine eine Mehrzahl von optischen Fasern aufweisende rohrförmige Hülle gebildet ist, eine Aramidgarnbewicklung zur Zugentlastung des Kabels sowie einen Außenmantel aufweist. Die Aramidgarnbewicklung und der Außenmantel führen dabei zu einem gegenüber dem Durchmesser der Bündelader wesentlich vergrößerten Durchmesser des Kabels.

Ausgehend von diesem Stand der Technik liegt der Erfindung das Problem zugrunde, ein optisches Kabel zu schaffen, das einen kleinen Außendurchmesser und ein geringes Gewicht aufweist und das die vor mechanischen Beanspruchungen wirkungsvoll geschützte Unterbringung einer Vielzahl von optischen Fasern ermöglicht.

Dieses Problem wird durch die Erfindung gelöst, indem in der rohrförmigen Hülle zugfeste Elemente eingebettet sind, bzw. bei der Extrusion der inneren Schicht und der äußeren Schicht zugfeste Elemente in die rohrförmige Hülle eingebracht werden.

Die durch die Erfindung erzielbaren Vorteile bestehen insbesondere darin, daß das lediglich aus der einzigen rohrförmigen Hülle und in dieser verlaufenden optischen Fasern bestehende optische Kabel durch den Verzicht auf eine auf die rohrförmige Hülle aufgebrachte Bewehrung und auf einen darüber angeordneten Außenmantel einen kleinen Außendurchmesser und ein geringes Gewicht je Längeneinheit aufweist. Selbst bei einem sehr kleinen Außendurchmesser der rohrförmigen Hülle kann eine Vielzahl von optischen Fasern in dem optischen Kabel untergebracht werden. Die in der rohrförmigen Hülle des Kabels eingebetteten zugfesten Elemente gewährleisten eine ausreichende Zugentlastung der optischen Fasern. Das erfindungsgemäße optische Kabel eignet sich als Innenraumkabel, insbesondere aber auch als nichtselbsttragendes Luftkabel zur Installation an einem Tragseil wie z. B. einem Erdseil oder einem Phasenseil einer Hochspannungsfreileitung. In dem letztgenannten Anwendungsfall sind das geringe Gewicht und der geringe Außendurchmesser des optischen Kabels für eine einfache und kostengünstige Installation von besonderem Vorteil, da mit den bekannten Verlege- und Installationsvorrichtungen sehr große Lauflängen des optischen Kabels an einem an Masten aufgehängten Tragseil installiert werden können. Darüber hinaus ist das erfindungsgemäße optische Kabel einfach und kostengünstig herstellbar.

Durch die in den Unteransprüchen aufgeführten Merkmale sind vorteilhafte Weiterbildungen und Verbesserungen der Erfindung möglich.

Für eine einfache Einbringung der zugfesten Elemente in die rohrförmige Hülle des durch die einzige rohrförmige Hülle und in dieser verlaufende optische Fasern gebildeten optischen Kabels und eine wirkungsvolle Zugentlastung der optischen Fasern ist es von Vorteil, wenn die zugfesten Elemente im Bereich zwischen der inneren Schicht und der äußeren Schicht in die rohrförmige Hülle eingebracht werden. Dabei wird die Zugfestigkeit der beiden Schichten der rohrförmigen Hülle in gleichem Maße verbessert.

Vorteilhaft ist es ebenfalls, wenn zugfeste Elemente in die äußere Schicht der rohrförmigen Hülle eingebracht werden.

Wird das optische Kabel an einem Phasenseil oder Erdseil einer Hochspannungsfreileitung installiert, so ist es von Vorteil, wenn die innere Schicht der rohrförmigen Hülle aus einem hochtemperaturfesten Kunststoff ausgebildet ist, der eine Schmelztemperatur von zumindest 160°C aufweist, so daß die rohrförmige Hülle auch bei höheren thermischen Belastungen einen zuverlässigen mechanischen Schutz der optischen Fasern gewährleistet.

Um diesen Anforderungen zu genügen, ist es von Vorteil, wenn die innere Schicht der rohrförmigen Hülle aus einem Polyamid ausgebildet ist. Polyamide haben zudem den Vorteil einer glatten Oberfläche, so daß die Gefahr einer Beschädigung einer optischen Faser bei der Berührung der inneren Wandung der rohrförmigen Hülle vermieden ist.

Die äußere Schicht der rohrförmigen Hülle des erfindungsgemäßen optischen Kabels, der als äußerste Schicht des Kabels zugleich die Funktion eines Außenmantels zukommt, ist vorzugsweise aus einem gegen UV-Licht und Chemikalien beständigen und eine hohe mechanische Festigkeit aufweisenden Kunststoff ausgebildet. Bei der Installation des optischen Kabels an einem Phasen- oder Erdseil einer Hochspannungsfreileitung ist es besonders vorteilhaft, wenn die äußere Schicht der rohrförmigen Hülle aus einem kriechstromfesten Kunststoff ausgebildet ist.

Die Erfindung ist in der Zeichnung vereinfacht dargestellt und in der nachfolgenden Beschreibung näher erläutert. Es zeigen die Fig. 1 ein Ausführungsbeispiel eines erfindungsgemäßen optischen Kabels, die Fig. 2 die Installation eines erfindungsgemäßen optischen Kabels an einem Tragelement und die Fig. 3 eine Vorrichtung zum Herstellen eines erfindungsgemäßen optischen Kabels.

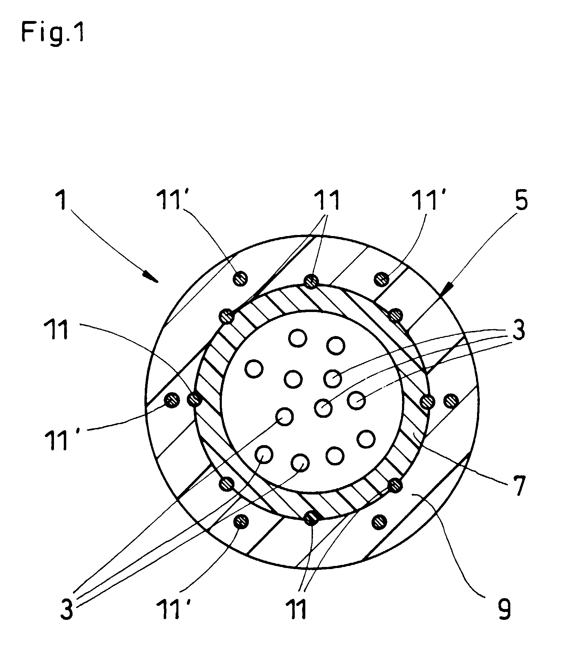

Das in der Fig. 1 beispielhaft dargestellte optische Kabel 1, das sich insbesondere als an einem Erd- oder Phasenseil einer Hochspannungsfreileitung befestigtes nicht-selbsttragendes optisches Luftkabel eignet, hat eine Mehrzahl von optischen Fasern 3, die gemeinsam von einer einzigen rohrförmigen Hülle 5 umschlossen sind. Dabei können die optischen Fasern 3 gegenüber der rohrförmigen Hülle 5 eine Überlänge von mehr als 10 % aufweisen. Die rohrförmige Hülle 5 ist aus einer aus einem Kunststoff bestehenden inneren Schicht 7 und einer unmittelbar darüber liegenden, aus einem Kunststoff bestehenden äußeren Schicht 9 gebildet, die beide in einem gemeinsamen Arbeitsschritt extrudiert sind. Beispielsweise im Bereich zwischen der inneren Schicht 7 und der äußeren Schicht 9 sind in die rohrförmige Hülle 5 zugfeste Elemente 11 eingebettet, die in Längsrichtung des optischen Kabels 1 verlaufen. Zusätzlich sind bei dem dargestellten Ausführungsbeispiel in der äußeren Schicht 9 der rohrförmigen Hülle 5 ebenfalls in Längsrichtung des optischen Kabels 1 verlaufende zugfeste Elemente 11' eingebettet. Bei den zugfesten Elementen 11 und 11' handelt es sich z. B. um Aramidfasern oder um Aramidfasern enthaltende Elemente. Es können aber auch beliebige andere hochzugfeste Elemente verwendet werden. Die rohrförmige Hülle 5 kann zum Schutz der optischen Fasern 3 vor Feuchtigkeit mit einer geeigneten thixotropen Masse gefüllt sein.

Die innere Schicht 7 der rohrförmigen Hülle 5 ist beispielsweise aus einem einen möglichst hohen amorphen Anteil und eine entsprechend hohe Glasübergangstemperatur von zumindest 100°C sowie eine glatte Oberfläche aufweisenden Kunststoff wie einem teilkristallinen Polyamid ausgebildet. Für die äußere Schicht 9 der rohrförmigen Hülle 5, die die äußerste Schicht des optischen Kabels 1 bildet, kommt es bei der Verlegung des optischen Kabels 1 im Freien darauf an, daß der verwendete Werkstoff gegenüber UV-Licht und Chemikalien beständig ist, eine hohe mechanische Festigkeit aufweist und zudem im Falle der Befestigung des optischen Kabels 1 an einem Erd- oder Phasenseil eine hohe Kriechstromfestigkeit hat. Aus diesen Gründen ist die äußere Schicht 9 z. B. aus Polypropylen ausgebildet. Sie kann aber beispielsweise auch aus einem geeigneten Polyethylen oder Fluorpolymer ausgebildet sein.

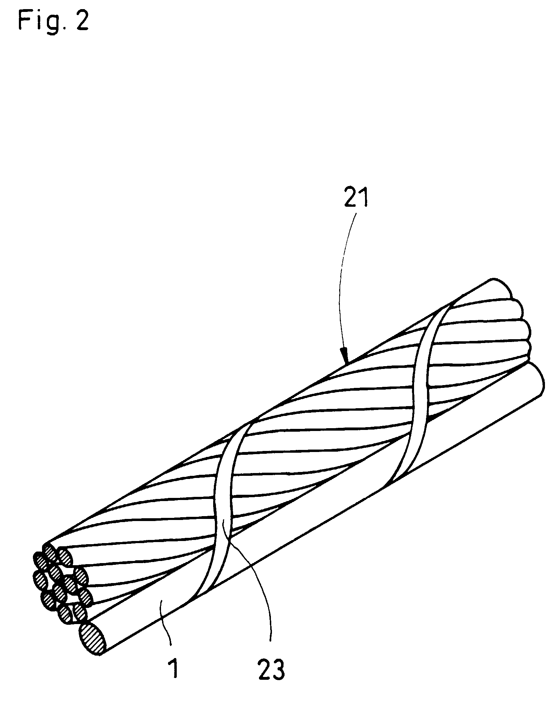

Die Fig. 2 zeigt ein erfindungsgemäßes optisches Kabel 1, das an einem Tragseil 21 angeordnet ist. Bei dem Tragseil 21 handelt es sich z. B. um ein Erdseil oder ein Phasenseil einer Hochspannungsfreileitung. Das optische Kabel 1 ist an dem Tragseil 21 beispielsweise mittels eines wendelförmig um Tragseil und optisches Kabel herumgelegten Haltebandes 23 gehalten.

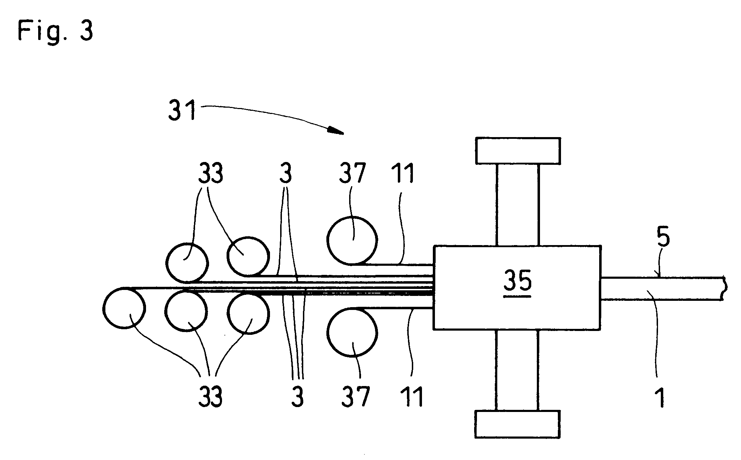

In der Fig. 3 ist beispielhaft eine Vorrichtung 31 zum Herstellen eines erfindungsgemäßen optischen Kabels 1 dargestellt. Bei dieser Vorrichtung 31 werden die optischen Fasern 3 von Vorratsspulen 33 abgezogen und einer Extrusionseinrichtung 35 zugeführt. Beispielsweise parallel zu den optischen Fasern 3 gelangen zugfeste Elemente 11 bzw. 11', die ihrerseits von Vorratsspulen 37 abgezogen werden, in die Extrusionseinrichtung 35. Die Extrusionseinrichtung 35 weist beispielsweise zwei Vorratsbehälter für die Kunststoffe der inneren Schicht und der äußeren Schicht der rohrförmigen Hülle 5 sowie zwei Extruderschnecken auf. In der Extrusionseinrichtung 35 werden eine innere Schicht und eine äußere Schicht, die gemeinsam eine zweischichtige rohrförmige Hülle 5 bilden, in einem Arbeitsschritt zeitgleich mittels eines gemeinsamen Spritzkopfes gemeinsam um die optischen Fasern 3 extrudiert. Eine solche gemeinsame Extrusion zweier Schichten wird auch als Co-Extrusion bezeichnet. Während dieses Extrusionsprozesses werden die z. B. parallel zu den optischen Fasern 3 geführten zugfesten Elemente 11 bzw. 11' in die sich bildende rohrförmige Hülle 5 miteingebracht und in diese eingebettet.

Nach der Extrusion ergibt sich ein optisches Kabel 1 mit in seiner rohrförmigen Hülle 5 eingebetteten zugfesten Elementen 11 bzw. 11', das einen sehr kleinen Außendurchmesser und eine für viele Anwendungsfälle ausreichende Festigkeit aufweist.

## Patentansprüche

1. Optisches Kabel mit wenigstens einer optischen Faser, die von einer eine innere Schicht und eine äußere Schicht aufweisenden und in einem Arbeitsschritt extrudierten rohrförmigen Hülle umschlossen ist, dadurch gekennzeichnet, daß in der rohrförmigen Hülle (5) zugfeste Elemente (11, 11') eingebettet sind.

2. Optisches Kabel nach Anspruch 1, dadurch gekennzeichnet, daß in der rohrförmigen Hülle (5) im Bereich zwischen der inneren Schicht (7) und der äußeren Schicht (9) zugfeste Elemente (11) eingebettet sind.

3. Optisches Kabel nach Anspruch 1 oder 2, dadurch gekennzeichnet, daß in der äußeren Schicht (9) der rohrförmigen Hülle (5) zugfeste Elemente (11') eingebettet sind.

4. Optisches Kabel nach einem der Ansprüche 1 bis 3, dadurch gekennzeichnet, daß die innere Schicht (7) der rohrförmigen Hülle (5) aus einem hochtemperaturfesten Kunststoff ausgebildet ist.

5. Optisches Kabel nach einem der Ansprüche 1 bis 4, dadurch gekennzeichnet, daß die innere Schicht (7) der rohrförmigen Hülle (5) aus einem eine Schmelztemperatur von zumindest 160°C aufweisenden Kunststoff ausgebildet ist.

6. Optisches Kabel nach einem der Ansprüche 1 bis 5, dadurch gekennzeichnet, daß die innere Schicht (7) der rohrförmigen Hülle (5) aus einem Polyamid ausgebildet ist.

7. Optisches Kabel nach einem der Ansprüche 1 bis 6, dadurch gekennzeichnet, daß die äußere Schicht (9) der rohrförmigen Hülle (5) aus einem kriechstromfesten Kunststoff ausgebildet ist.

8. Verfahren zum Herstellen eines wenigstens eine von einer rohrförmigen Hülle umschlossene optische Faser aufweisenden optischen Kabels, bei dem eine innere Schicht und eine äußere Schicht der rohrförmigen Hülle in einem Arbeitsschritt gemeinsam um die optische Faser extrudiert werden, dadurch gekennzeichnet, daß bei der Extrusion der inneren Schicht (7) und der äußeren Schicht (9) zugfeste Elemente (11, 11') in die rohrförmige Hülle (5) eingebracht werden.

9. Verfahren nach Anspruch 8, dadurch gekennzeichnet, daß zugfeste Elemente (11) im Bereich zwischen der inneren Schicht (7) und der äußeren Schicht (9) in die rohrförmige Hülle (5) eingebracht werden.

10. Verfahren nach Anspruch 8 oder 9, dadurch gekennzeichnet, daß zugfeste Elemente (11') in die äußere Schicht (9) der rohrförmigen Hülle (5) eingebracht werden.
